# EUROPÄISCHE PATENTSCHRIFT

(11) **EP 3 473 521 B1**
(45) Veröffentlichungstag und Bekanntmachung des Hinweises auf die Patenterteilung: **29.04.2020**
(21) Anmeldenummer: 17197556.8
(22) Anmeldetag: 20.10.2017
(51) Int. Cl.: B61L 15/00, G07C 9/00, E05F 15/73

(54) **PERSONENBEFÖRDERUNGSFAHRZEUG**
PASSENGER TRANSPORT VEHICLE
VÉHICULE POUR TRANSPORT DE PASSAGERS

(43) Veröffentlichungstag der Anmeldung: 24.04.2019
(73) Patentinhaber: MAGNA STEYR Fahrzeugtechnik AG & Co KG, 8041 Graz (AT)
(72) Erfinder: ERLACHER, Manuel, 9545 Radenthein (AT); KRACHLER, Gerhard, 8211 Großpesendorf (AT); RODLER, Martin, 8160 Krottendorf (AT); ROSINGER, Walter, 8010 Graz (AT)
(74) Vertreter: Zangger, Bernd

(56) Entgegenhaltungen:
- EP-A1- 1 100 050
- EP-A1- 2 801 956
- CN-U- 202 557 404
- CN-U- 202 929 714
- JP-A- S6 394 390
- JP-A- 2012 101 626
- US-B1- 6 919 804
- US-B1- 7 188 760

## Beschreibung

### Gebiet der Erfindung

Die vorliegende Erfindung betrifft ein Personenbeförderungsfahrzeug und ein Verfahren zum Betreiben eines solchen Personenbeförderungsfahrzeugs.

### Stand der Technik

Personenbeförderungsfahrzeuge, wie insbesondere Busse und Bahnen, Omnibusse, Vorfeldbusse und dergleichen, sind an sich hinlänglich bekannt. Üblicherweise bieten sie mehr als 4 Plätze, meist auch mehr als 8 Plätze für Fahrgäste, die mittels des Personenbeförderungsfahrzeugs zu ihrem Ziel gebracht werden können. Die Personenbeförderungsfahrzeuge sind üblicherweise für eine bestimmte Maximalanzahl von Fahrgästen oder ein höchstzulässiges Gesamtgewicht ausgelegt. Die vorliegende Erfindung betrifft die Einhaltung solcher Maximalbefüllungswerte, wie zum Beispiel Maximalanzahl von Fahrgästen oder höchstzulässiges Gesamtgewicht.

Zum Ein- und Aussteigen weisen solche Fahrzeuge üblicherweise Türen auf, beispielsweise elektrisch, pneumatisch oder hydraulisch betriebene Türen, die oft vollautomatisch oder halbautomatisch betrieben werden können. Beispielsweise können die Türen auf Knopfdruck durch Fahrgäste innerhalb und außerhalb des Personenbeförderungsfahrzeugs geöffnet werden. Je nach Verwendungszweck und Ausgestaltung des konkreten Fahrzeuges können die Türen beispielsweise auch auf Knopfdruck durch den Busfahrer geöffnet oder geschlossen werden, oder es gibt die Möglichkeit, dass die Fahrgäste durch Drücken eines Signalgebers, zum Beispiel im Fahrzeug an mehreren Positionen und/oder außen an den Türen angeordnete Druckknöpfe, den Wunsch auf Öffnen der Tür hinterlegen, der dann vom Fahrzeug automatisiert und/oder vom Fahrer nach Stillstand des Fahrzeuges umgesetzt werden kann.

Bekannt sind auch optische Systeme zum Erfassen von Personen, die bestimmte Personen durch Videoüberwachung und Gesichtserkennung identifizieren können, beispielsweise aus der WO 2012/130808 A1.

Andererseits gibt es auch Vorrichtungen die, beispielsweise mittels Kameras und/oder Lasersensoren, das Vorhandensein von Personen - unabhängig von deren Identität - und auch die Bewegungsrichtung der Personen, insbesondere im Eingangsbereich von Gebäuden, erkennen können. Solche Vorrichtungen erlauben das Erkennen der Anwesenheit beliebiger Personen oder auch das Zählen von Personen und das Ermitteln deren Bewegungsrichtung. CN 202 557 404 U und CN 202 929 714 U offenbaren Personenbeförderungsfahrzeuge nach dem Oberbegriff des Anspruchs 1.

### Zusammenfassung der Erfindung

Es ist eine Aufgabe der Erfindung, ein Personenbeförderungsfahrzeug anzugeben, dass eine einfache Einhaltung eines Maximalbefüllungswerts, insbesondere der Maximalanzahl von Fahrgästen des Personenbeförderungsfahrzeugs oder eines Maximalgewichtes, erlaubt, sowie ein entsprechendes Verfahren zur Einhaltung des Maximalbefüllungswerts des Personenbeförderungsfahrzeugs.

Die Lösung der Aufgabe erfolgt durch ein Personenbeförderungsfahrzeug nach dem Anspruch 1, umfassend zumindest eine Tür, eine Steuereinheit zum Schließen der Tür, sowie eine mit der Steuereinheit kommunikationsverbundene Vorrichtung zum Detektieren eines Befüllungswertes des Personenbeförderungsfahrzeugs, wobei die Steuereinheit dazu eingerichtet ist, dass sie, wenn die Tür geöffnet ist und wenn der Befüllungswert mindestens einem festgelegten Maximalbefüllungswert entspricht, einen Schließvorgang der Tür einleitet.

Erfindungsgemäß weist also ein Personenbeförderungsfahrzeug, insbesondere ein Bus, eine Tür mit einer der Tür zugeordneten Steuereinheit auf, wobei die Steuereinheit von einer geeigneten Detektier-Vorrichtung zumindest die grundlegenden Daten oder auch den fertig ausgewerteten aktuellen Befüllungswert erhält, so dass die Steuereinheit bei Überschreiten eines maximalen Befüllungswertes einen Schließvorgang der Tür starten kann.

Vor allem autonom fahrende Personenbeförderungseinrichtungen bzw. Kraftfahrzeuge haben den Nachteil, dass deren höchstzulässige Personenzahl oder das höchstzulässige Gesamtgewicht nicht durch mitfahrendes Personal kontrolliert werden kann. Für derartige Fahrzeuge kann die Einhaltung der maximalen Personenanzahl und/oder des höchstzulässigen Gesamtgewichts oder ähnlicher Befüllungsgrößen des Fahrzeuges durch eine erfindungsgemäße Ausgestaltung des Personenbeförderungsfahrzeugs, umfassend eine geeignete Vorrichtung zum Detektieren der aktuellen Belegung und eine entsprechende Ausbildung einer Steuereinheit, erreicht werden.

Der Schließvorgang der Tür kann vorzugsweise, vor dem tatsächlichen Schließen der Tür, die Ausgabe eines akustischen und/oder optischen Warnsignals umfassen.

Der Schließvorgang der Tür kann bevorzugt, vor dem tatsächlichen Schließen der Tür, eine Aktivierung einer Zugangsbeschränkung umfassen, insbesondere eine Aktivierung, vorzugsweise Schließen, einer Schranke oder eines Balkens. Auf diese Weise kann der Zugang in das Personenbeförderungsfahrzeug bereits erschwert werden und ein baldiges Schließen der Tür angekündigt werden, bevor noch die Tür tatsächlich geschlossen wird.

Vorzugsweise umfasst der Schließvorgang der Tür eine Überprüfung einer oder mehrerer Schließvoraussetzungen, so dass nur bei Vorliegen festgelegter positiver Werte der Schließvoraussetzungen die Tür tatsächlich geschlossen wird. Solche Schließvoraussetzungen können beispielsweise darin bestehen, dass sich keine Person in einem näher festgelegten Gefahrenbereich der Tür befindet, oder dass bestimmte Sonderkonditionen wie ein Notfallstatus vorliegen oder nicht vorliegen.

Erfindungsgemäß gibt der Befüllungswert die Anzahl der aktuell im Personenbeförderungsfahrzeug befindlichen Personen an und der Maximalbefüllungswert eine Maximalpersonenanzahl des Personenbeförderungsfahrzeugs.

Die Vorrichtung zum Detektieren des Befüllungswertes des Personenbeförderungsfahrzeugs umfasst dann vorzugsweise eine Vorrichtung zum Erfassen einzelner einsteigender Personen und einzelner aussteigender Personen im Bereich der Tür. Die Vorrichtung zum Detektieren des Befüllungswertes oder die Steuereinheit kann daraus bevorzugt die Anzahl der aktuell im Personenbeförderungsfahrzeug befindlichen Personen ermitteln.

Das Personenbeförderungsfahrzeug umfasst somit vorzugsweise zumindest eine Tür, eine Vorrichtung zum Erfassen einzelner einsteigender Personen und einzelner aussteigender Personen im Bereich der Tür, sowie eine Steuereinheit, wobei die erfassten einzelnen einsteigenden Personen und einzelnen aussteigenden Personen an die Steuereinheit übermittelt werden und die Steuereinheit daraus die Anzahl der im Personenbeförderungsfahrzeug befindlichen Personen ermittelt, wobei die Steuereinheit dazu eingerichtet ist, dass sie, wenn die Tür geöffnet ist und wenn die Anzahl der im Personenbeförderungsfahrzeug befindlichen Personen mindestens einer festgelegten Maximalpersonenanzahl entspricht, einen Schließvorgang der Tür einleitet.

Das Personenbeförderungsfahrzeug ist dann mit einer Vorrichtung zum Erfassen einzelner einsteigender und aussteigender Personen ausgestattet. Das Erfassen einzelner Personen ist hierbei im Sinne des Detektierens der Anwesenheit einer Person zu verstehen, wobei also die Identität der Person erfindungsgemäß nicht bestimmt oder ausgewertet werden muss, sondern lediglich das Ereignis der anwesenden Person und deren Status als "einsteigende" oder "aussteigende" Person ermittelt wird. Der Status als einsteigende oder aussteigende Person kann insbesondere auf Grundlage der Bewegungsrichtung der Personen bestimmt werden. Das Ereignis der einsteigenden Person oder aussteigenden Person als solches wird registriert und an die Steuereinheit weiter gemeldet.

Aus diesen Mitteilungen kann die Steuereinheit der Tür oder auch der Detektionsvorrichtung, insbesondere mittels einfachem Addieren der Ereignisse der "einsteigenden Person" und Subtrahieren der Ereignisse der "aussteigenden Person", die aktuelle Gesamtanzahl von Personen im Personenbeförderungsfahrzeug ermitteln.

Falls diese ermittelte Gesamtanzahl von Personen im Personenbeförderungsfahrzeug die Maximalpersonenanzahl des Personenbeförderungsfahrzeug erreicht, die beispielsweise durch die Zulassung des Personenbeförderungsfahrzeugs vorgegeben sein kann, wird ein Schließvorgang der Tür eingeleitet, um weitere Personen am Einsteigen zu hindern.

Erfindungsgemäß kann die Maximalpersonenzahl überschritten werden, wenn zum Beispiel das zulässige Höchstgewicht noch nicht erreicht ist und/oder noch freie Plätze, insbesondere Sitzplätze, detektiert werden und/oder noch freier Innenraum detektiert wird.

Die für ein Fahrzeug zulässige Maximalpersonenzahl muss nicht längerfristig feststehend sein, sondern diese kann erfindungsgemäß dynamisch an die aktuellen Gegebenheiten angepasst werden.

Es kann beispielsweise detektiert werden, ob große, kleine, dünne oder korpulente Personen einsteigen. Auf Grund von fortlaufenden Messungen und Berechnungen oder über hinterlegte Datensätze kann dann durch die Steuereinheit eine Maximalpersonenzahl festgelegt werden, und somit beschränkt werden, wie viele Personen noch einsteigen dürfen. Insbesondere in Bussen mit Stehbereichen kann in einer weiteren Ausführungsform die Dichte der sich im Fahrzeug aufhaltenden Personen bzw. die zwischen den Personen verbleibenden Freiräume, insbesondere zusätzlich, erfasst bzw. detektiert werden, so dass abhängig davon durch die Steuereinheit die Maximalpersonenzahl festgelegt und so entschieden werden kann, ob eine tatsächlich maximale Personenzahl erreicht ist bzw. ob noch Personen einsteigen dürfen. Auf diese Weise kann ein optimaler Füllungsgrad des Innenraumes erreicht werden. Hierbei wird in einer bevorzugten Ausführungsform allerdings bei Erreichen eines zulässigen Höchstgewichtes kein weiterer Zutritt mehr möglich sein.

Erfindungsgemäß ist die Steuereinheit und/oder die Detektions-Vorrichtung daher so eingerichtet, dass durch die Steuereinheit und/oder die Vorrichtung die festgelegte Maximalpersonenanzahl während des Betriebs des Personenbeförderungsfahrzeugs dynamisch geändert werden kann, insbesondere auf Basis im Personenbeförderungsfahrzeug detektierter Freiräume. Optional kann auch eine Personenerkennung oder eine Gesichtserkennung durch die Steuereinheit erfolgen, die insbesondere der Feststellung dienen kann, ob tatsächlich Menschen ein- und/oder aussteigen, um die festgelegte Maximalpersonenzahl nicht zu überschreiten.

Vorzugsweise wird der Befüllungswert und/oder die Differenz zwischen Maximalbefüllungswert und Befüllungswert, also insbesondere die Anzahl der im Personenbeförderungsfahrzeug befindlichen Personen und/oder die Differenz zwischen Maximalpersonenanzahl und im Personenbeförderungsfahrzeug befindlichen Personen und somit die Anzahl der freien Plätze im Fahrzeug, in einem Display angezeigt, wobei das Display insbesondere so am Personenbeförderungsfahrzeug angeordnet ist, dass es von außerhalb des Personenbeförderungsfahrzeugs einsehbar ist, bevorzugt außen im Bereich der Tür. Die Anzahl der freien Plätze muss dabei nicht auf Sitzplätze eingeschränkt sein, sondern kann auch Stehplätze, Liegeplätze etc. umfassen.

Vorzugsweise ist das Personenbeförderungsfahrzeug zum autonomen Fahren ausgebildet, also zum Betrieb ohne einen Menschen als Fahrer. Gerade in einem solchen autonomen Personenbeförderungsfahrzeug ist eine automatische Einhaltung einer höchstzulässigen Personenanzahl und/oder eines höchstzulässigen Gesamtgewichts wertvoll.

Ein erfindungsgemäßes Verfahren zum Betreiben eines Personenbeförderungsfahrzeugs umfasst die Schritte, dass der aktuelle Befüllungswert des Personenbeförderungsfahrzeugs mit Hilfe der Vorrichtung zum Detektieren des Befüllungswertes des Personenbeförderungsfahrzeugs ermittelt wird und dass die Steuereinheit, wenn die Tür geöffnet ist und wenn der Befüllungswert mindestens dem festgelegten Maximalbefüllungswert entspricht, den Schließvorgang der Tür einleitet.

Dies kann insbesondere die Schritte umfassend, dass einzelne einsteigende Personen und einzelne aussteigende Personen im Bereich der Tür erfasst werden und an die Steuereinheit übermittelt werden, dass die Steuereinheit daraus die Anzahl der im Personenbeförderungsfahrzeug befindlichen Personen ermittelt, dass die Steuereinheit ermittelt ob die Tür geöffnet ist und ob die Anzahl der im Personenbeförderungsfahrzeug befindlichen Personen mindestens einer festgelegte Maximalpersonenanzahl entspricht und dass die Steuereinheit falls die beiden Bedingungen erfüllt sind, einen Schließvorgang der Tür einleitet.

Die für das Personenbeförderungsfahrzeug angegebenen Merkmale können selbstverständlich auch Merkmale eines erfindungsgemäßen Verfahrens darstellen und umgekehrt.

Die Erfindung gibt somit ein Personenbeförderungsfahrzeug an, dass eine einfache Einhaltung eines Maximalbefüllungswerts des Personenbeförderungsfahrzeugs erlaubt, insbesondere der Maximalanzahl von Fahrgästen und/oder eines zulässiges Höchstgewichts des Fahrzeuges bzw. dessen Ladefläche.

### Kurzbeschreibung der Zeichnungen

Die Erfindung wird im Folgenden beispielhaft unter Bezugnahme auf die Zeichnungen beschrieben.
- Fig. 1: ist eine schematische dreidimensionale Ansicht eines erfindungsgemäßen Personenbeförderungsfahrzeugs in einem ersten Zustand.
- Fig. 2: ist eine weitere schematische dreidimensionale Ansicht eines erfindungsgemäßen Personenbeförderungsfahrzeugs gemäß Fig. 1, in einem zweiten Zustand.
- Fig. 3: ist eine weitere schematische dreidimensionale Ansicht eines erfindungsgemäßen Personenbeförderungsfahrzeugs gemäß Fig. 1, in einem dritten Zustand.
- Fig. 4: ist eine schematische Darstellung einer möglichen Architektur einer Steuereinheit eines erfindungsgemäßen Personenbeförderungsfahrzeugs.
- Fig. 5: ist eine schematische Darstellung der Anbindung einer Architektur gemäß Fig. 4 an einen Fahrzeugbus des Personenbeförderungsfahrzeugs.

### Detaillierte Beschreibung der Erfindung

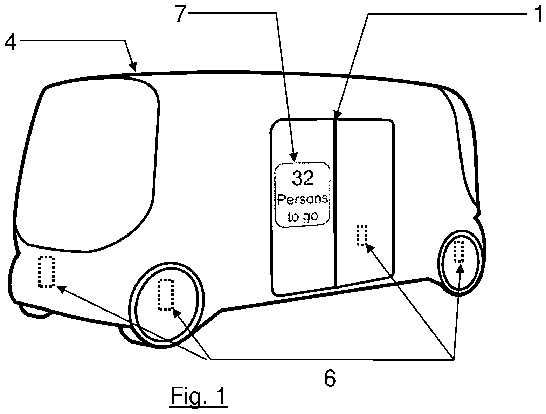

In den Fig. 1-3 ist ein erfindungsgemäßes Personenbeförderungsfahrzeug 4 dargestellt, insbesondere ein Bus, umfassend eine Tür 1, die hier als Flügeltür mit linkem und rechtem Türflügel ausgestaltet ist und die das Ein- und Aussteigen von Personen, insbesondere Passagieren des Personenbeförderungsfahrzeugs 4 ermöglicht.

An der Tür 1 ist ein Display 7 angeordnet, so dass dessen Anzeigeinhalt von Personen außerhalb des Personenbeförderungsfahrzeugs 4 einsehbar ist, insbesondere von Personen, die in das Fahrzeug einsteigen wollen. Das Display 4 zeigt eine Zahl an, die angibt, wie viele Personen noch in das Fahrzeug zusteigen können, nämlich die Differenz zwischen einer Maximalpersonenanzahl und der Anzahl der aktuell sich im Personenbeförderungsfahrzeug 4 befindlichen Personen.

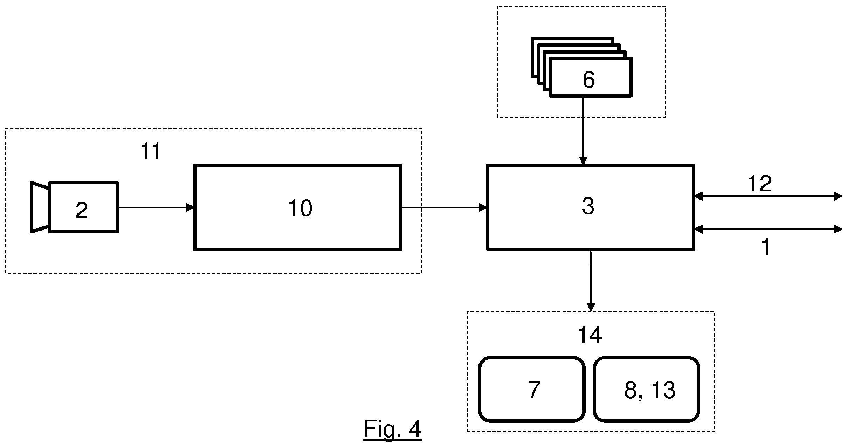

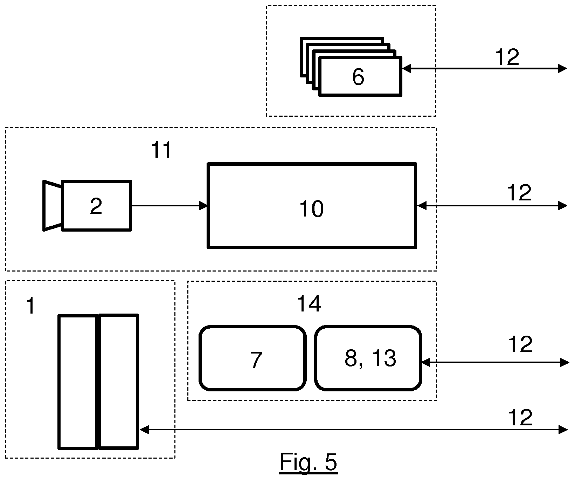

Ferner weist das Personenbeförderungsfahrzeug 4 mehrere Sensoren 6 zur Bestimmung eines Fahrzeuggewichtes auf, nämlich Gewichtssensoren die im Bereich eines Fahrwerks des Personenbeförderungsfahrzeugs 4 angeordnet sind. Über eine in den Fig. 4 und 5 dargestellte Steuereinheit 3 kann auf Basis des mit Hilfe der Sensoren 6 bestimmten Gewichts ein Schließvorgang der Tür 1 eingeleitet werden oder auch ein solcher verhindert werden.

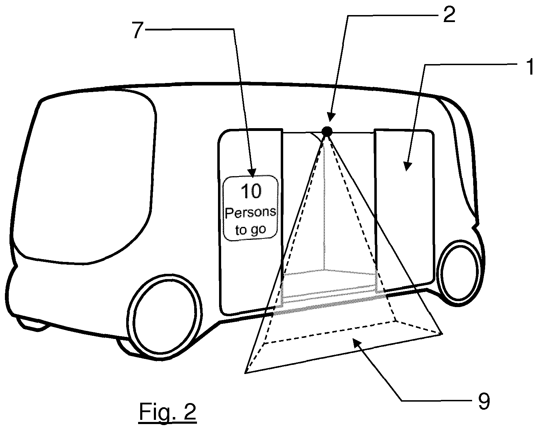

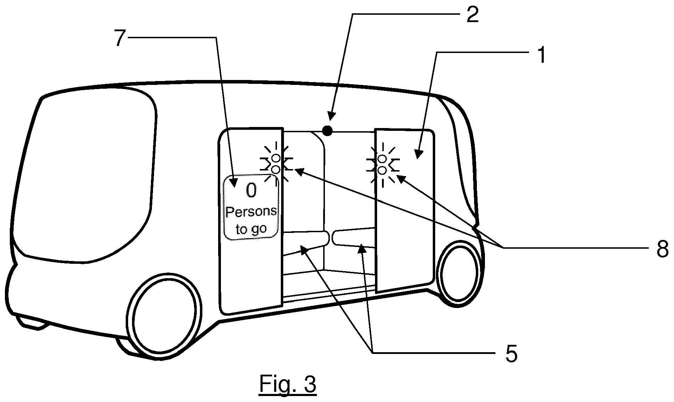

In den Fig. 2 und 3 ist das Personenbeförderungsfahrzeug 4 mit geöffneter Tür 1 dargestellt.

Eine Vorrichtung 2 zum Erfassen einzelner einsteigender Personen und einzelner aussteigender Personen im Bereich der Tür 1, insbesondere eine Kamera oder ein Sensor, ist oberhalb der Tür 1 im Türbereich angeordnet. Mittels dieser Kamera kann der Einstiegsbereich, genauer ein Erkennungsbereich 9 überwacht werden und die in diesem Erkennungsbereich 9 einsteigenden und aussteigenden Personen detektiert und an die Steuereinheit 3 gemeldet werden.

Die Steuereinheit 3 ermittelt daraus die Anzahl der im Personenbeförderungsfahrzeug 4 befindlichen Personen.

Die Steuereinheit 3 ist dazu eingerichtet, dass sie, wenn die Tür 1 geöffnet ist und wenn die Anzahl der im Personenbeförderungsfahrzeug 4 befindlichen Personen mindestens einer festgelegten Maximalpersonenanzahl entspricht, einen Schließvorgang der Tür 1 einleitet.

Vor dem tatsächlichen Schließen der Tür 1 kann der Schließvorgang der Tür 1 noch die Ausgabe eines akustischen und/oder optischen Warnsignals umfassen, beispielsweise durch Leuchten oder Blinken von Warnlampen 8, wie in Fig. 3 dargestellt.

Ebenso kann der Schließvorgang der Tür 1 vor dem tatsächlichen Schließen der Tür 1 eine Aktivierung einer Zugangsbeschränkung 5 umfassen, insbesondere eine Aktivierung einer Schranke oder eines Balkens, insbesondere wie in Fig. 3 dargestellt das Schließen von zwei seitlichen Balken, die den Zugang zum Personenbeförderungsfahrzeug 4 verhindern oder erschweren.

Fig. 4 zeigt eine mögliche Architektur einer Steuereinheit 3 eines erfindungsgemäßen Personenbeförderungsfahrzeugs 4.

Die Steuereinheit 3 wird im Wesentlichen durch einen Mikrocontroller verwirklicht, auf welchem ein Steuerprogramm ausführbar ist, zur Ermittlung der Anzahl der im Personenbeförderungsfahrzeug 4 befindlichen Personen, sowie zur Ermittlung ob die Tür 1 geöffnet ist und ob die Anzahl der im Personenbeförderungsfahrzeug 4 befindlichen Personen mindestens einer festgelegten Maximalpersonenanzahl entspricht. Durch das Steuerprogramm und somit durch die Steuereinheit 3 kann, falls diese Bedingungen erfüllt sind, ein Schließvorgang der Tür 1 eingeleitet werden. Die Steuereinheit 3 kann auch auf mehrere Mikrocontroller und/oder mehrere Steuerprogramme und/oder mehrere Steuergeräte verteilt ausgebildet sein. Beispielsweise kann die Funktionalität der Summierung der Anzahl ein- und aussteigender Personen auf einem Steuergerät ausgebildet sein, dass der Vorrichtung 2 zum Erfassen einzelner einsteigender Personen und einzelner aussteigender Personen im Bereich der Tür, insbesondere einer Kamera oder eines Sensors, zugeordnet und dort angeordnet sein.

Wie in Fig. 4 dargestellt, kann eine optische Personen-Erkennungseinrichtung 11 beispielsweise zusätzlich zur genannten Vorrichtung, insbesondere Kamera, 2 eine Bild-Auswertung 10 umfassen. Die Ergebnisse der Bild-Auswertung 10, insbesondere einzelne detektierte Personen oder deren aktuelle Gesamtanzahl, werden an den zentralen Mikrocontroller der Steuereinheit 3 gemeldet.

Ferner verfügt die Steuereinheit 3 über Eingänge von den Sensoren 6 zur Bestimmung des Fahrzeuggewichtes.

Zum Erkennen des Zustandes sowie zum Öffnen und Schließen der Tür 1 gibt es eine bidirektionale Verbindung zwischen Steuereinheit 3 und Tür 1. Eine weitere bidirektionale Verbindung besteht zu einem Fahrzeugbus 12, also Datenbus, insbesondere CAN-Bus des Fahrzeuges.

Schließlich können optische und akustische Signalgeber 14, insbesondere das Display 7 zur Anzeige der im Fahrzeug befindlichen Personen, sowie Warnlampen 8 und/oder Lautsprecher 13 von der Steuereinheit 3 angesprochen werden.

Wie in Fig. 5 dargestellt, kann eine Anbindung von Steuerkomponenten der Steuereinheit 3 an den Fahrzeugbus 12 des Personenbeförderungsfahrzeugs 4 auch zusätzliche direkte Verbindungen umfassen. Insbesondere können die Sensoren zur Bestimmung eines Fahrzeuggewichtes 6 bzw. ein Steuermodul umfassend diese Sensoren 6, die optische Personen-Erkennungseinrichtung 11, die Tür 1 bzw. ein Steuermodul umfassend die Tür 1, und/oder die optischen und akustischen Signalgeber 14 an den Fahrzeugbus direkt angebunden sein.

### Bezugszeichenliste

- 1: Tür
- 2: Vorrichtung zum Erfassen einzelner einsteigender Personen und einzelner aussteigender Personen im Bereich der Tür (zum Beispiel Kamera oder Sensor)
- 3: Steuereinheit
- 4: Personenbeförderungsfahrzeug
- 5: Zugangsbeschränkung
- 6: Sensoren zur Bestimmung eines Fahrzeuggewichtes
- 7: Display
- 8: Warnlampe
- 9: Erkennungsbereich
- 10: Bild-Auswertung
- 11: Optische Personen-Erkennungseinrichtung
- 12: Fahrzeugbus
- 13: Lautsprecher
- 14: Optische und akustische Signalgeber

## Patentansprüche

1. Personenbeförderungsfahrzeug, umfassend zumindest eine Tür (1), eine Steuereinheit (3) zum Schließen der Tür (1), sowie eine mit der Steuereinheit (3) kommunikationsverbundene Vorrichtung (2, 6) zum Detektieren eines Befüllungswertes des Personenbeförderungsfahrzeugs (4), wobei die Steuereinheit (3) dazu eingerichtet ist, dass sie, wenn die Tür (1) geöffnet ist und wenn der Befüllungswert mindestens einem festgelegten Maximalbefüllungswert entspricht, einen Schließvorgang der Tür (1) einleitet, wobei der Befüllungswert die Anzahl der aktuell im Personenbeförderungsfahrzeug (4) befindlichen Personen angibt und der Maximalbefüllungswert eine Maximalpersonenanzahl des Personenbeförderungsfahrzeugs (4) angibt.,
**dadurch gekennzeichnet, dass** die Steuereinheit (3) und/oder die Vorrichtung (2, 6) so eingerichtet ist, dass durch die Steuereinheit (3) und/oder die Vorrichtung (2, 6) die festgelegte Maximalpersonenanzahl während des Betriebs des Personenbeförderungsfahrzeugs (4) dynamisch geändert werden kann.

2. Personenbeförderungsfahrzeug nach Anspruch 1,
**dadurch gekennzeichnet, dass** der Schließvorgang der Tür (1) vor dem tatsächlichen Schließen der Tür (1) die Ausgabe eines akustischen und/oder optischen Warnsignals umfasst.

3. Personenbeförderungsfahrzeug nach Anspruch 1,
**dadurch gekennzeichnet, dass** der Schließvorgang der Tür (1) eine Überprüfung eines oder mehrerer Schließkriterien umfasst, so dass nur bei Vorliegen festgelegter positiver Werte der Schließkriterien die Tür (1) tatsächlich geschlossen wird.

4. Personenbeförderungsfahrzeug nach zumindest einem der vorhergehenden Ansprüche,
**dadurch gekennzeichnet, dass** der Schließvorgang der Tür (1) vor dem tatsächlichen Schließen der Tür (1) eine Aktivierung einer Zugangsbeschränkung (5) umfasst, insbesondere eine Aktivierung einer Schranke oder eines Balkens.

5. Personenbeförderungsfahrzeug nach zumindest einem der vorhergehenden Ansprüche,
**dadurch gekennzeichnet, dass** die Vorrichtung (2, 6) zum Detektieren des Befüllungswertes des Personenbeförderungsfahrzeugs (4) eine Vorrichtung (2) zum Erfassen einzelner einsteigender Personen und einzelner aussteigender Personen im Bereich der Tür (1) umfasst und die Vorrichtung (2, 6) zum Detektieren des Befüllungswertes oder die Steuereinheit (3) daraus die Anzahl der aktuell im Personenbeförderungsfahrzeug (4) befindlichen Personen ermittelt.

6. Personenbeförderungsfahrzeug nach zumindest einem der vorhergehenden Ansprüche,
**dadurch gekennzeichnet, dass** die Steuereinheit (3) und/oder die Vorrichtung (2, 6) so eingerichtet ist, dass durch die Steuereinheit (3) und/oder die Vorrichtung (2, 6) die festgelegte Maximalpersonenanzahl während des Betriebs des Personenbeförderungsfahrzeugs (4) dynamisch geändert werden kann, auf Basis im Personenbeförderungsfahrzeug (4) detektierter Freiräume.

7. Personenbeförderungsfahrzeug nach zumindest einem der vorhergehenden Ansprüche,
**dadurch gekennzeichnet, dass** der Befüllungswert und/oder die Differenz zwischen Maximalbefüllungswert und Befüllungswert in einem Display (7) angezeigt wird, wobei das Display (7) insbesondere so am Personenbeförderungsfahrzeug (4) angeordnet ist, dass es von außerhalb des Personenbeförderungsfahrzeugs (4) einsehbar ist.

8. Personenbeförderungsfahrzeug nach zumindest einem der vorhergehenden Ansprüche,
**dadurch gekennzeichnet, dass** das Personenbeförderungsfahrzeug (4) zum autonomen Fahren ausgebildet ist, also zum Betrieb ohne Fahrer.

9. Verfahren zum Betreiben eines Personenbeförderungsfahrzeugs nach zumindest einem der vorhergehenden Ansprüche,
**dadurch gekennzeichnet, dass** der aktuelle Befüllungswert des Personenbeförderungsfahrzeugs (4) mit Hilfe der Vorrichtung (2, 6) zum Detektieren des Befüllungswertes des Personenbeförderungsfahrzeugs (4) ermittelt wird und die Steuereinheit (3), wenn die Tür (1) geöffnet ist und wenn der Befüllungswert mindestens dem festgelegten Maximalbefüllungswert entspricht, den Schließvorgang der Tür (1) einleitet.

## Claims

1. Passenger transport vehicle, comprising at least one door (1), a control unit (3) for closing the door (1) and an apparatus (2, 6), communicatively connected to the control unit (3), for detecting a fill value for the passenger transport vehicle (4), wherein the control unit (3) is configured so that, when the door (1) is open and when the fill value is consistent with at least one stipulated maximum fill value, it initiates a closing process for the door (1), wherein the fill value indicates the number of people currently in the passenger transport vehicle (4), and the maximum fill value indicates a maximum number of people for the passenger transport vehicle (4),
**characterized in that** the control unit (3) and/or the apparatus (2, 6) is configured so that the control unit (3) and/or the apparatus (2, 6) can dynamically change the defined maximum number of people during operation of the passenger transport vehicle (4).

2. Passenger transport vehicle according to Claim 1,
**characterized in that** the closing process for the door (1) comprises output of an audible and/or visual warning signal before the actual closing of the door (1).

3. Passenger transport vehicle according to Claim 1,
**characterized in that** the closing process for the door (1) comprises a check on one or more closing criteria, so that the door (1) is actually closed only if defined positive values for the closing criteria are available.

4. Passenger transport vehicle according to at least one of the preceding claims,
**characterized in that** the closing process for the door (1) comprises activation of an entry restriction (5), in particular activation of a barrier or a beam, before the actual closing of the door (1).

5. Passenger transport vehicle according to at least one of the preceding claims,
**characterized in that** the apparatus (2, 6) for detecting the fill value for the passenger transport vehicle (4) comprises an apparatus (2) for sensing individual boarding people and individual alighting people in the region of the door (1), and the apparatus (2, 6) for detecting the fill value or the control unit (3) ascertains the number of people currently in the passenger transport vehicle (4) therefrom.

6. Passenger transport vehicle according to at least one of the preceding claims,
**characterized in that** the control unit (3) and/or the apparatus (2, 6) is configured so that the control unit (3) and/or the apparatus (2, 6) can dynamically change the defined maximum number of people during operation of the passenger transport vehicle (4), on the basis of free spaces detected in the passenger transport vehicle (4).

7. Passenger transport vehicle according to at least one of the preceding claims,
**characterized in that** the
fill value and/or the difference between the maximum fill value and the fill value is displayed in a display (7), wherein the display (7) is arranged on the passenger transport vehicle (4) in particular such that it is visible from outside the passenger transport vehicle (4).

8. Passenger transport vehicle according to at least one of the preceding claims,
**characterized in that** the passenger transport vehicle (4) is designed for autonomous driving, that is to say for operation without a driver.

9. Method for operating a passenger transport vehicle according to at least one of the preceding claims,
**characterized in that** the current fill value for the passenger transport vehicle (4) is ascertained using the apparatus (2, 6) for detecting the fill value for the passenger transport vehicle (4), and the control unit (3), when the door (1) is open and when the fill value is consistent with at least the stipulated maximum fill value, initiates the closing process for the door (1).

## Revendications

1. Véhicule de transport de personnes, comprenant au moins une porte (1), une unité de commande (3) destinée à fermer la porte (1), ainsi qu'un dispositif (2, 6) connecté en communication avec l'unité de commande (3) destiné à détecter une valeur de remplissage du véhicule de transport de personnes (4), l'unité de commande (3) étant conçue de sorte que lorsque la porte (1) est ouverte et lorsque la valeur de remplissage correspond au moins à une valeur de remplissage maximale fixée, elle initie une opération de fermeture de la porte (1), la valeur de remplissage indiquant le nombre de personnes qui se trouvent actuellement dans le véhicule de transport de personnes (4) et la valeur de remplissage maximale indiquant un nombre maximal de personnes du véhicule de transport de personnes (4), **caractérisé en ce que** l'unité de commande (3) et/ou le dispositif (2, 6) est conçu de telle sorte que le nombre maximal de personnes fixé peut être modifié dynamiquement par l'unité de commande (3) et/ou le dispositif (2, 6) pendant le fonctionnement du véhicule de transport de personnes (4).

2. Véhicule de transport de personnes selon la revendication 1, **caractérisé en ce que** l'opération de fermeture de la porte (1) comprend, avant la fermeture effective de la porte (1), l'émission d'un signal d'alerte sonore et/ou visuel.

3. Véhicule de transport de personnes selon la revendication 1, **caractérisé en ce que** l'opération de fermeture de la porte (1) comprend un contrôle d'un ou de plusieurs critères de fermeture, de sorte que la porte (1) n'est réellement fermée qu'en présence de valeurs positives constatées des critères de fermeture.

4. Véhicule de transport de personnes selon au moins l'une des revendications précédentes, **caractérisé en ce que** l'opération de fermeture de la porte (1) comprend, avant la fermeture effective de la porte (1), une restriction d'accès (5), notamment une activation d'une barrière ou d'une barre.

5. Véhicule de transport de personnes selon au moins l'une des revendications précédentes, **caractérisé en ce que** le dispositif (2, 6) destiné à détecter la valeur de remplissage du véhicule de transport de personnes (4) comprend un dispositif (2) destiné à détecter les personnes embarquant individuelles et les personnes débarquant individuelles dans la zone de la porte (1) et le dispositif (2, 6) destiné à détecter la valeur de remplissage ou l'unité de commande (3) déterminant à partir de cela le nombre de personnes qui se trouvent actuellement dans le véhicule de transport de personnes (4) .

6. Véhicule de transport de personnes selon au moins l'une des revendications précédentes, **caractérisé en ce que** l'unité de commande (3) et/ou le dispositif (2, 6) est configuré de telle sorte que le nombre maximal de personnes fixé pendant le fonctionnement du véhicule de transport de personnes (4) peut être modifié dynamiquement par l'unité de commande (3) et/ou le dispositif (2, 6) en se basant sur les espaces libres détectés dans le véhicule de transport de personnes (4).

7. Véhicule de transport de personnes selon au moins l'une des revendications précédentes, **caractérisé en ce que** la valeur de remplissage et/ou la différence entre la valeur de remplissage maximale et la valeur de remplissage est affichée sur un afficheur (7), l'afficheur (7) étant notamment disposé sur le véhicule de transport de personnes (4) de manière à ce qu'il soit visible depuis l'extérieur du véhicule de transport de personnes (4).

8. Véhicule de transport de personnes selon au moins l'une des revendications précédentes, **caractérisé en ce que** le véhicule de transport de personnes (4) est conçu pour un déplacement autonome, c'est-à-dire pour un fonctionnement sans conducteur.

9. Procédé pour faire fonctionner un véhicule de transport de personnes selon au moins l'une des revendications précédentes, **caractérisé en ce que** la valeur de remplissage actuelle du véhicule de transport de personnes (4) est déterminée à l'aide du dispositif (2, 6) destiné à détecter une valeur de remplissage du véhicule de transport de personnes (4) et l'unité de commande (3), lorsque la porte (1) est ouverte et lorsque la valeur de remplissage correspond au moins à la valeur de remplissage maximale fixée, initie l'opération de fermeture de la porte (1).
